# EUROPÄISCHE PATENTANMELDUNG

(11) **EP 2 269 807 A1**
(43) Veröffentlichungstag der Anmeldung: **05.01.2011**
(21) Anmeldenummer: 09164112.6
(22) Anmeldetag: 30.06.2009
(51) Int. Cl.: B29C 65/08, B29C 65/06, B65D 77/20, B29C 65/76

(54) **Vorrichtung, Verwendung der Vorrichtung und Verfahren zum torsionalen Ultraschallschweissen**

(71) Anmelder: Telsonic Holding AG, 9552 Bronschhofen (CH)
(72) Erfinder: Möglich, Hartmut, 76275 Ettlingen (DE)
(74) Vertreter: Müller, Christoph Emanuel

(57) **Zusammenfassung**

Eine Vorrichtung und ein Verfahren zum torsionalen Ultraschallschweissen zum Verbinden von zwei Teilen (4,5) unter Verwendung einer Steuermittel (7) zum Einstellen von Verfahrensparametern für den Ultraschallschweiss-Vorgang, mit deren Hilfe eine Sonotrode (2) derart ansteuerbar ist, dass nach Beendigung des Ultraschallschweiss-Vorgangs ein erstes, wenigstens teilweise aus einer Kunststofffolie bestehendes Teil (4) zum Wegreissen lösbar mit einem zweiten Teil (5) verbunden ist.

## Beschreibung

Die Erfindung betrifft eine Vorrichtung zum torsionalen Ultraschallschweissen gemäss dem Oberbegriff von Anspruch 1. Weiterhin betrifft die Erfindung die Verwendung einer Vorrichtung sowie ein Verfahren zum torsionalen Ultraschallschweissen.

Zum Verpacken von Verpackungsgut werden häufig Verpackungen verwendet, bei denen ein Behälter durch eine Folie oder einen thermogeformten oder spritzgegossenen Deckel verschlossen ist. Häufig ist es dabei wünschenswert, dass die Folie bzw. der Deckel ohne grössere Kraftanstrengungen wieder vom Behälter entfernt werden kann.

Derartige Verpackungen mit peelfähigen Folien und entsprechende Vorrichtungen und Verfahren zum Verbinden von Folien an Behälter sind seit längerer Zeit bekannt und gebräuchlich. In der DE 36 13 155 A1 ist beispielsweise eine leicht zu öffnende Verpackung mit einem Deckel beschrieben. Der Deckel ist für ein einfaches Öffnungsverhalten als Verbundfolie ausgestaltet, die eine Siegelschicht und Haftvermittlerschicht aufweist.

Aus der DE 103 59 035 A1 ist ein Behälter mit einem weg- oder abreissbaren Deckel bekannt geworden, wobei der Deckel über eine Peelschicht mit dem Behälterrand verschweisst ist. Unter dem Begriff "Peelschicht" wird eine Kunststoffschicht (z.B. aus PP, PET, PE oder PS) verstanden, deren Temperaturbeständigkeit bzw. deren Schmelzpunkt niedriger liegt als der des reinen Polymermaterials. Dies kann durch entsprechende Zusätze erreicht werden kann. Als Schweissmethode wird in der DE 103 59 035 A1 ein Ultraschallverschweissen genannt. Zum lösbaren Verbinden zweier Teile werden Ultraschall-Schweissanlagen mit axial anregbaren Sonotroden verwendet, die senkrecht auf die zu verschweissenden Teile einwirken (Longitudinal-Schwinger). In der Praxis hat sich gezeigt, dass derart verschweisste Verpackungen ungünstige und insbesondere unregelmässige Peeleigenschaften aufweisen können. Ein weiterer Nachteil besteht darin, dass der Schweissprozess verhältnismässig schwierig kontrollierbar ist. Im Übrigen eignen sich die bekannten Ultraschallverschweissen häufig nicht zum Verarbeiten sehr dünner Folien.

Es ist deshalb eine Aufgabe der vorliegenden Erfindung, die Nachteile des Bekannten zu vermeiden und insbesondere eine Vorrichtung und ein Verfahren der eingangs genannten Art zu schaffen, mit dem sich auf einfache Art und Weise ein verschweisstes Produkt mit einer vorteilhaften Handhabung insbesondere mit einer regelmässigen, gut kontrollierbaren Abreissbarkeit erzeugen lässt. Mit der Vorrichtung und dem Verfahren soll zudem ein Anschweissen oder Verschweissen von sehr dünnwandigen Teilen möglich sein. Zudem soll das Verbinden möglichst kostengünstig erfolgen.

Erfindungsgemäss werden diese und andere Aufgaben mit einer Vorrichtung, der Verwendung einer Vorrichtung und einem Verfahren gemäss den Merkmalen der unabhängigen Ansprüche gelöst.

Die erfindungsgemässe Vorrichtung zum torsionalen Ultraschallschweissen zum Verbinden von zwei Teilen enthält eine zu torsionalen Ultraschallschwingungen anregbare Sonotrode und einen Amboss. Solche Komponenten sind dem Fachmann in unterschiedlichsten Ausführungsvarianten bekannt. Neu gegenüber dem Stand der Technik ist jedoch, dass die Vorrichtung über Steuermittel verfügt, die derart mit der Sonotrode in Wirkverbindung stehen, dass die Verfahrensparameter für den Ultraschweiss-Vorgang gezielter einstellbar sind; und dass nach Beendigung des Ultraschweiss-Vorgangs ein erstes, wenigstens teilweise aus einer Folie und/oder aus Kunststoff bestehendes Teil zum Wegreissen lösbar mit einem zweiten Teil verbunden ist. Mit dieser Vorrichtung lässt sich somit ein verschweisstes Produkt mit einer vorteilhaften Handhabung erzeugen. Unter "lösbar" wird hier eine Verbindung verstanden, die - im Gegensatz zur unlösbaren Verbindung - mit geringem Kraftaufwand, typischerweise durch einfaches einhändiges Ziehen eines Verschlusses, zerstörungsfrei oder nahezu zerstörungsfrei wieder lösbar ist.

Die Vorrichtung kann derart ausgestaltet sein, dass mit dieser zwar schwache, jedoch für eine provisorische Befestigung ausreichend starke (Schweiss-)Verbindung erzeugt werden können. Alternativ oder zusätzlich ist eine Schweissanordnung denkbar, die aus einer Vielzahl von Schweisspunkten aufgebaut ist. Eine derartige punktuelle Verschweissung kann durch speziell darauf abgestimmte Betriebsweise und/oder durch eine entsprechende Ausgestaltung der Sonotrode erreicht werden.

Die Vorrichtung eignet sich insbesondere zum Verarbeiten von (z.B thermogeformten) Folien und spritzgegossenen Kunststoffbehältern mit speziellen Beschichtungen, die dem Fachmann unter den Begriffen "Peelschicht" und "Siegelschicht" bekannt sind. Beispielsweise können mit der Vorrichtung Folien verarbeitet werden, die z.B. unter der Produktbezeichnung Sure-Peel™ (u.v.a.) bekannt sind. Die Siegelschicht kann durch Beaufschlagung mit Ultraschallschwingungen aktiviert werden, sodass eine Verschweissung oder eine Oberflächenhaftung (Adhäsion) erfolgt.

Mit der erfindungsgemässen Vorrichtung erschliesst sich ein neues Anwendungsgebiet für das torsionale Ultraschallschweissen. Die Anwendung von torsionalen Schwingungen führt zu unerwartet gleichmässigem Abreissverhalten.

Mit dieser Vorrichtung können verschiedene Arten von Folien verarbeitet werden. Für das erste Teil kommen Kunststofffolien, Laminate oder metallische Folien mit den vorgängig erwähnten Beschichtungen in Frage. Auch das zweite Teil kann ein eine Folie sein. Selbstverständlich könnte das erste und/oder das zweite Teil aber auch ein vergleichsweise starrer (z.B. spritzgegossener oder thermogeformter) Formkörper, beispielsweise ein Behälter (z.B. ein Jogurtbecher) oder ein Gehäuse sein.

Ein weiterer Aspekt der Erfindung betrifft die Verwendung einer Vorrichtung zum torsionalen Ultraschallschweissen und insbesondere eine Vorrichtung der vorgängig genannten Art zum Erzeugen von lösbaren Verbindungen zwischen zwei Teilen.

Das erste Teil und/oder das zweite Teil können vor einem Ultraschallschweiss-Vorgang wenigstens abschnittsweise mit einer peelfähigen Oberflächenbeschichtung oder Zwischenschicht, insbesondere mit einer Peelschicht oder einer Siegelschicht, versehen sein.

Die peelfähige Oberflächenbeschichtung oder Zwischenschicht des ersten Teil und/oder des zweiten Teils können dabei Kohäsiv-Peel-Eigenschaften aufweisen. Derartige Folien oder Teile sind dem Fachmann unter der englischen Bezeichnung "cohesive peel" bestens bekannt. Alternativ kommen aber auch Teile mit sogenannten Burst-Peel-Eigenschaften oder Break-Peel-Eigenschaften in Frage. In der vorgängig erwähnten DE 36 13 155 A1 ist eine mit einem konventionellen Verfahren geschaffene Verbindungsanordnung beschrieben, die Burst-Peel-Eigenschaften aufweist.

Eine vorteilhafte Verwendung ergibt sich dadurch, dass mit der Vorrichtung sehr dünne Materialien verarbeitet werden können. Mit dieser Vorrichtung ist es weiterhin möglich, sensible Teile oder kritische Materialkombinationen wie etwa beschichtete oder lackierte AL-Platinen oder tiefgezogene Aluminium-Becher zu verschweissen.

Durch die torsionale Energieeinleitung kann gewährleistet werden, dass beispielsweise die Siegelschicht weniger axial belastet wird. Dadurch wird weniger Material der Siegelschicht aus dem Schweissbereich ausgetrieben, sodass eine gleichmässigere Restschichtdicke nach der Verschweissung vorhanden ist. Ein weiterer Vorteil des torsionalen Ultraschallschweissens ist daher ein gleichmässiges Peelverhalten.

Eine weitere vorteilhafte Verwendung der Vorrichtung ist die Herstellung einer Verpackung, bei der das erste Teil einen (thermogeformten, tiefgezogenen oder spritzgegossenen) Deckel bildet, der einen durch das zweite Teil gebildeten Behälter zur Aufnahme von Verpackungsgut verschliesst.

Dabei kann zum erleichterten Erfassen am ersten Teil z.B. eine Abreisslasche angeformt sein. Mit Hilfe solcher Abreisslaschen lässt sich das erste Teil besonders einfach wegreissen.

Ein weiterer Aspekt der Erfindung betrifft ein Verfahren zum torsionalen Ultraschallschweissen zum Verbinden eines ersten Teils mit wenigstens einem zweiten Teil. Dabei kann das erste Teil wenigstens teilweise aus einer Folie bestehen. Zum Verbinden der beiden Teile wird das erste Teil derart mit torsionalen Ultraschallschwingungen beaufschlagt, dass nach Beendigung des Ultraschallschweiss-Vorgangs das erste Teil zum Wegreissen durch einen Verbraucher lösbar mit dem zweiten Teil verbunden ist.

Bei Verwendung von Teilen mit handelsüblichen Peelschichten (wie z.B. Sure-Peel™) kann während dem Ultraschallschweiss-Vorgang das erste Teil durch die Sonotrode mit einem definierten Anpressdruck von beispielsweise wenigstens 5 N/mm2 beaufschlagt werden, wobei der Anpressdruck bevorzugt zwischen 10 und 20 N/m2 liegt. Je nach Art der Teile sind aber auch andere Anpressdrücke denkbar. Besonders vorteilhaft kann es sein, wenn während dem gesamten oder einem Teil des Ultraschallschweiss-Vorgangs der Anpressdruck etwa konstant gehalten wird. Durch das Vermeiden von dynamischen, oszillierenden Beanspruchungen des Materials in axialer Richtung bzw. senkrecht zu den Teilen kann eine schonende Behandlung der zu verschweissenden Teile gewährleistet werden. Der vergleichsweise hohe Anpressdruck stellt zudem eine Schweissqualität sicher, die auch höheren Ansprüchen genügt. Insbesondere lassen sich ausreichend starke Schweissverbindungen - selbstverständlich unter Aufrechterhaltung der gewünschten Wegreissbarkeit - herstellen, die das Risiko eines unbeabsichtigten Ablösens der Folie (z.B. beim Transport von Verpackungen) erheblich senken.

Weitere Einzelmerkmale und Vorteile der Erfindung ergeben sich aus der nachfolgenden Beschreibung der Ausführungsbeispiele und aus den Zeichnungen. Es zeigt:

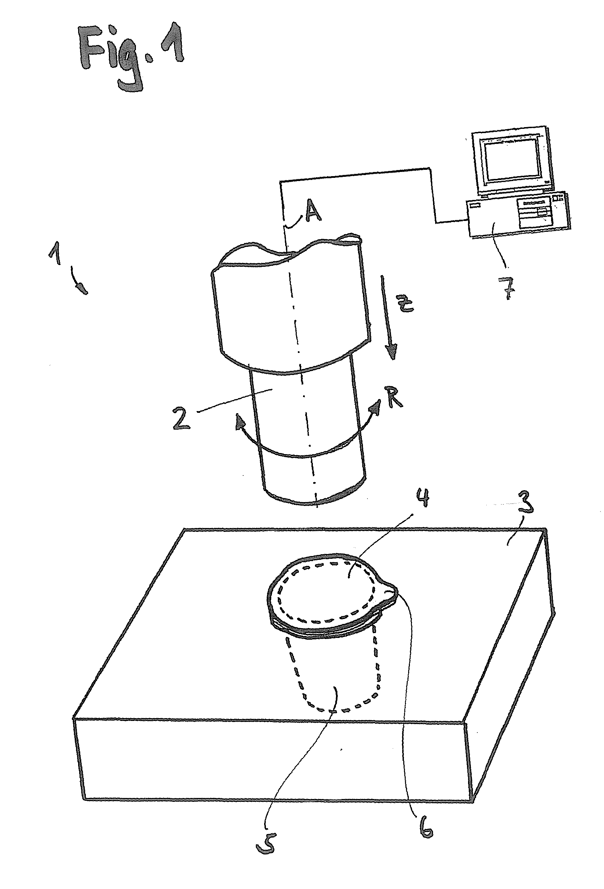

- Figur 1: eine perspektivische Darstellung einer erfindungsge- mässen Vorrichtung zum torsionalen Ultraschall- schweissen.

In Figur 1 ist eine insgesamt mit 1 bezeichnete Vorrichtung zum torsionalen Ultraschallschweissen in einer vereinfachten Darstellung gezeigt. Die Vorrichtung weist eine zu torsionalen Ultraschallschwingungen anregbare Sonotrode 2 auf, die über einem Amboss 3 angeordnet ist. Die Torsionsachse ist dabei mit A bezeichnet und die torsionale Schwingung mit R bezeichnet. Der Amboss 3 verfügt über eine nicht näher bezeichnete Formteilaufnahme, in dem ein Behälter 5 aufgenommen ist. Beim Behälter kann es sich beispielsweise um einen Jogurtbecher aus Kunststoff handeln. Die offene Oberseite des Behälters 5 ist durch eine Folie oder einen Deckel 4 verschlossen, die durch torsionale Beaufschlagung an den Behälterrand angeschweisst werden kann.

Die Sonotrode 1 ist in einer z-Richtung auf und ab bewegbar mittels einer (hier nicht dargestellten) Hub- und Senkvorrichtung. Die Hub- und Senkvorrichtung dient dazu, eine Anpresskraft auf die auf dem Behälterrand liegende Folie/Deckel 4 in z-Richtung aufzubringen. Die beispielsweise mit der Peelschicht Sure-Peel™ versehene Folie 4 wird während dem Ultraschallschweiss-Vorgang durch die über die erwähnten Steuermittel angesteuerte Sonotrode 2 mit einem definierten Anpressdruck von wenigstens 5 N/mm2 beaufschlagt, wobei der Anpressdruck bevorzugt zwischen 10 und 20 N/m2 liegt. Dabei ist es vorteilhaft, wenn während dem gesamten oder einem Teil des Ultraschallschweiss-Vorgangs der Anpressdruck in etwa konstant gehalten wird. Die Dauer eines jeweiligen Torsionsschweissvorgangs kann etwa 100 - 300 ms betragen und liegt damit in etwa im üblichen Bereich einer konventionellen Ultraschallschweissung mit einem longitudinalen Schwinger. Zum lösbaren Verschweissen hat sich bei Tests Ultraschall im Frequenzbereich von ungefähr 20 kHz - 40 kHz als vorteilhaft erwiesen. Die Schwingungsamplitude liegt dabei ebenfalls im Bereich einer üblichen Verschweißung mit longitudinalem Ultraschall-Schwingern. Die Schwingungsamplitude kann dabei vorteilhaft etwa 25 - 30 µm betragen.

Die Sonotrode 2 ist mit einer Steuerung 7 verbunden, mit deren Hilfe der Schweissvorgang kontrolliert werden kann. Die Steuerung 7 dient zum Einstellen der Verfahrensparameter für den Ultraschallschweiss-Vorgang. Sodann enthält die Steuerung weiter Eingabemittel, über die der gewünschte Anpressdruck eingestellt werden kann. Die Sonotrode 2 ist über die Steuerung 7 derart ansteuerbar, dass nach Beendigung des Ultraschallschweiss-Vorgangs die Folie/der Deckel 4 zum einfachen Wegreissen lösbar mit dem Behälter 5 verbunden ist. Die Vorrichtung 1 eignet sich insbesondere zum Verarbeiten von Folien/Deckeln mit speziellen Beschichtungen, die dem Fachmann unter den Begriffen "Peelschicht" und "Siegelschicht" bekannt sind. So können mit der Vorrichtung 1 etwa Folien 2 verarbeitet werden, die z. B. unter der Produktbezeichnung Sure-Peel™ (u.v.m) bekannt sind. Weiterhin könnten mit der vorliegenden Vorrichtung beispielhaft Deckel an den Behälter angeschweisst werden, wie sie in der DE 36 13 155 A1 oder der DE 103 59 035 A1 beschrieben wurden.

Durch das erfindungsgemässe torsionale Ultraschallschweissen können auch Materialien kombiniert werden, die bislang noch nicht verarbeitet werden konnten. So ist es mit der vorliegenden Vorrichtung möglich, beispielsweise PET-Schichten oder lackierte Oberflächen zu verarbeiten.

## Patentansprüche

1. Vorrichtung zum Ultraschallschweissen zum Verbinden von zwei Teilen (4, 5) mit einer Sonotrode (2) und einem Amboss (3), **dadurch gekennzeichnet, dass** sie eine Vorrichtung (1) zum torsionalen Ultraschallschweissen ist, die wenigstens eine zu torsionalen Ultraschallschwingungen anregbare Sonotrode (2) aufweist und dass sie Steuermittel (7) enthält, mit denen die Sonotrode (2) zum Einstellen von Verfahrensparametern für einen Ultraschallschweiss-Vorgang derart ansteuerbar ist, dass nach Beendigung des Ultraschallschweiss-Vorgangs ein erstes, wenigstens teilweise aus Kunststoff und/oder einer Folie bestehendes Teil (4) zum Wegreissen lösbar mit einem zweiten Teil (5) verbunden ist.

2. Verwendung einer Vorrichtung (1) zum torsionalen Ultraschallschweissen und insbesondere einer Vorrichtung nach Anspruch 1 zum Verbinden von zwei Teilen (4, 5), von denen ein erstes Teil (4) wenigstens teilweise aus Kunststoff und/oder einer Folie besteht, wobei das erste Teil (4) zum Wegreissen lösbar mit einem zweiten Teil (5) verbunden ist.

3. Verwendung einer Vorrichtung nach Anspruch 2, wobei das erste Teil (4) und/oder das zweite Teil (5) vor einem Ultraschallschweiss-Vorgang wenigstens abschnittsweise mit einer peelfähigen Oberflächenbeschichtung oder Zwischenschicht, insbesondere mit einer Peelschicht oder einer Siegelschicht, versehen ist.

4. Verwendung einer Vorrichtung nach Anspruch 3, wobei die peelfähige Oberflächenbeschichtung oder Zwischenschicht des ersten Teils (4) und/oder des zweiten Teils (5) Kohäsiv-Peel-Eigenschaften aufweist oder wenigstens eines der Teile (4, 5) Burst-Peel- oder Break-Peel-Eigenschaften aufweist.

5. Verwendung einer Vorrichtung nach einem der Ansprüche 2 bis 4 zum Herstellen einer Verpackung, wobei das erste Teil (4) einen Deckel bildet, der ein durch das zweite Teil (5) gebildeten Behälter zur Aufnahme von Verpackungsgut verschliesst, wobei zum erleichterten Erfassen am ersten Teil eine Abreisslasche (6) angeformt ist.

6. Verfahren zum Ultraschallschweissen zum lösbaren Verbinden eines ersten Teils (4) mit wenigstens einem zweiten Teil (5), wobei das erste Teil (4) vorzugsweise wenigstens teilweise aus Kunststoff und/oder einer Folie besteht, **dadurch gekennzeichnet, dass** zum Verbinden der beiden Teile (4, 5) das erste Teil (4, 5) derart mit torsionalen Ultraschallschwingungen beaufschlagt wird, dass nach Beendigung des Ultraschallschweiss-Vorgangs das erste Teil (4) zum Wegreissen lösbar mit dem zweiten Teil (5) verbunden ist.
